# EUROPEAN PATENT SPECIFICATION

(11) **EP 3 008 832 B1**
(45) Date of publication and mention of the grant of the patent: **26.08.2020**
(21) Application number: 14737098.5
(22) Date of filing: 10.06.2014
(51) Int. Cl.: H04B 7/06, H04B 7/0404, H04W 52/42, H04B 7/26

(54) **METHOD AND APPARATUS FOR TRANSMISSION BY TIME DIVISION DUPLEXING (TDD) DEVICES USING MULTIPLE ANTENNAS**
ÜBERTRAGUNGSVERFAHREN UND -VORRICHTUNG MITHILFE VON ZEITTEILUNGSMULTIPLEXING (TDD)-VORRICHTUNGEN MIT MEHREREN ANTENNEN
PROCÉDÉ ET APPAREIL POUR UNE TRANSMISSION PAR DES DISPOSITIFS À DUPLEXAGE PAR RÉPARTITION DANS LE TEMPS (TDD), AU MOYEN D'UNE PLURALITÉ D'ANTENNES

(30) Priority: 11.06.2013 US 201361833767 P; 23.10.2013 US 201314061536
(43) Date of publication of application: 20.04.2016
(73) Proprietor: Qualcomm Incorporated, San Diego, CA 92121-1714 (US)
(72) Inventor: YAN, Hongbo, San Diego, California 92121-1714 (US); KANG, Insung, San Diego, California 92121-1714 (US); FILIPOVIC, Daniel Fred, San Diego, California 92121-1714 (US); FAN, Michael Mingxi, San Diego, California 92121-1714 (US); HE, Ning, San Diego, California 92121-1714 (US); LIU, Minkui, San Diego, California 92121-1714 (US)
(74) Representative: Loveless, Ian Mark
(86) International application number: PCT/US2014/041625
(87) International publication number: WO 2014/200958

(56) References cited:
- WO-A1-2010/069357
- WO-A1-2011/042051
- WO-A1-2011/084715
- GB-A- 2 315 645
- US-A1- 2007 173 303
- US-A1- 2012 149 424

## Description

### BACKGROUND

### Field

Aspects of the present disclosure relate generally to wireless communications and, more particularly, to method and apparatus for transmission by time division duplexing (TDD) devices using multiple antennas.

### Background

Wireless communication networks are widely deployed to provide various communication services such as telephony, video, data, messaging, broadcasts, and so on. The networks may be multiple access networks capable of supporting communications for multiple users by sharing the available network resources. An example of such a network is a Universal Terrestrial Radio Access Network (UTRAN). UTRAN is the Radio Access Network (RAN) that is part of the Universal Mobile Telecommunications System (UMTS), a third generation (3G) mobile phone technology promulgated by the "3rd Generation Partnership Project" (3GPP). UMTS, which is the successor to Global System for Mobile Communications (GSM), currently uses various standards including Wideband Code Division Multiple Access (WCDMA), High Speed Downlink Packet Data (HSDPA), Time Division-Code Division Multiple Access (TD-CDMA), and Time Division-Synchronous Code Division Multiple Access (TD-SCDMA). By way of example, China is pursuing TD-SCDMA as the underlying air interface in the UTRAN architecture with the existing GSM infrastructures for the core network.

Time division duplexing (also referred to as time domain duplexing or TDD) is the application of time division multiplexing to separate outward and return signals between a user equipment (UE) and a network. By multiplexing over time, TDD emulates full duplex communication over a half duplex communication link. Time division duplexing is particularly advantageous when uplink (UL), or transmit (TX), and downlink (DL), or receive (RX), data rates are asymmetrical. As an amount of uplink (or downlink) data increases, communication capacity can be dynamically increased for uplink (or downlink) communications; similarly, as traffic load becomes lighter, communication capacity on the uplink (or downlink) can be reduced.

A UE employing a traditional TDD system with a single, fixed antenna for transmissions may experience a large number of unsuccessful communications from the UE to a network.

As such, improvements in transmissions by UEs using TDD systems are desired. GB2315645A describes a cell-site base station apparatus comprising an array of diversity antennas for receiving multipath components of a mobile-transmitted signal. Receivers connected to the antennas, produce strength indication signals RSSI and demodulated signals. For transmission of a control signal from the cell-site to a mobile station, a variable gain transmitter TX is coupled to one of the antennas and the control signal is sent at a first power level. When a connection is established for the mobile station, the strength indication signals RSSI from the receivers are examined to detect a highest strength value and the antenna at which the multipath component of the highest value is arriving, is selected. The transmitter is then switched to the selected antenna for transmitting traffic signals and the gain of the transmitter is set to a second power level lower than the first power level to compensate for the transmit diversity gain of the selected antenna.

### SUMMARY

The invention is defined in the appended claims to which reference should now be made. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect, a method for transmission by a time division duplexing (TDD) device is described. The method may include receiving a communication on a frequency at a first antenna having a first receive condition and a second antenna having a second receive condition. The method may include determining a first transmit condition for the first antenna based on the first receive condition and a second transmit condition for the second antenna based on the second receive condition. The method may include comparing the first transmit condition and the second transmit condition. The method may include selecting one of the first antenna and the second antenna based on the comparing. The method may include sending a transmission on the frequency from the selected one of the first antenna and the second antenna.

In an aspect, a computer program product for transmission by a time division duplexing (TDD) device is described. The computer program product may include a computer readable medium comprising code. The code may cause at least one computer to receive a communication on a frequency at a first antenna having a first receive condition and a second antenna having a second receive condition. The code may cause at least one computer to determine a first transmit condition for the first antenna based on the first receive condition and a second transmit condition for the second antenna based on the second receive condition. The code may cause at least one computer to compare the first transmit condition and the second transmit condition. The code may cause at least one computer to select one of the first antenna and the second antenna based on the comparing. The code may cause at least one computer to send a transmission on the frequency from the selected one of the first antenna and the second antenna.

In an aspect, an apparatus for transmission by a time division duplexing (TDD) device is described. The apparatus may include means for receiving a communication on a frequency at a first antenna having a first receive condition and a second antenna having a second receive condition. The apparatus may include means for determining a first transmit condition for the first antenna based on the first receive condition and a second transmit condition for the second antenna based on the second receive condition. The apparatus may include means for comparing the first transmit condition and the second transmit condition. The apparatus may include means for selecting one of the first antenna and the second antenna based on the comparing. The apparatus may include means for sending a transmission on the frequency from the selected one of the first antenna and the second antenna.

In an aspect, an apparatus for transmission by a time division duplexing (TDD) device is described. The apparatus may include at least one memory in communication with a communication module, a receive/transmit condition module, a comparison module, and a selection module. The apparatus may include the communication module configured to receive a communication on a frequency at a first antenna having a first receive condition and a second antenna having a second receive condition. The apparatus may include the receive/transmit condition module configured to determine a first transmit condition for the first antenna based on the first receive condition and a second transmit condition for the second antenna based on the second receive condition. The apparatus may include the comparison module configured to compare the first transmit condition and the second transmit condition. The apparatus may include the selection module configured to select one of the first antenna and the second antenna based on the comparing. The communication module may be further configured to send a transmission on the frequency from the selected one of the first antenna and the second antenna.

In an aspect, a method for transmission by a time division duplexing (TDD) device is described. The method may include receiving a communication on a frequency at a first antenna having a first receive condition and a second antenna having a second receive condition. The method may include comparing the first receive condition and the second receive condition. The method may include selecting one of the first antenna and the second antenna based on the comparing. The method may include determining a transmit condition for the selected one of the first antenna and the second antenna based on the corresponding first receive condition or second receive condition. The method may include configuring a transmission on the selected one of the first antenna and the second antenna based on the determined transmit condition. The method may include sending the transmission on the frequency from the selected one of the first antenna and the second antenna.

In an aspect, a method for transmission by a time division duplexing (TDD) device is described. The method may include receiving a communication on a frequency at a first antenna having a first receive condition and a second antenna having a second receive condition. The first receive condition and the second receive conditions may be signal strengths. The method may include determining a first transmission conditioning value for the first antenna based on the first receive condition and a second transmission conditioning value for the second antenna based on the second receive condition. The first transmission conditioning value and the second transmission conditioning value may be weights associated with transmission power. The method may include adjusting a first transmission power of the first antenna based on the first transmission conditioning value. The method may include adjusting a second transmission power of the second antenna based on the second transmission conditioning value. The method may include activating a first transmission chain associated with the first antenna and a second transmission chain associated with the second antenna. The first transmission chain may be associated with an active radio access technology or carrier and the second transmission chain may be associated with an inactive radio access technology or carrier. The method may include sending the transmission from the first antenna using the first transmission chain based on the adjusted first transmission power and from the second antenna using the second transmission chain based on the adjusted second transmission power.

In an aspect, a computer program product for transmission by a time division duplexing (TDD) device is described. The computer program product may include a computer readable medium comprising code. The code may cause at least one computer to receive a communication on a frequency at a first antenna having a first receive condition and a second antenna having a second receive condition. The code may cause at least one computer to determine a first transmission conditioning value for the first antenna based on the first receive condition and a second transmission conditioning value based on the second receive condition. The first transmission conditioning value and the second transmission conditioning value may be weights associated w:th transmission power. The code may cause at least one computer to adjust a first transmission power of the first antenna based on the first transmission conditioning value. The code may cause at least one computer to adjust a second transmission power of the second antenna based on the second transmission conditioning value. The code may cause at least one computer to activate a first transmission chain associated with the first antenna and a second transmission chain associated with the second antenna. The first transmission chain may be associated with an active radio access technology or carrier and the second transmission chain may be associated with an inactive radio access technology or carrier. The code may cause at least one computer to send the transmission from the first antenna using the first transmission chain based on the adjusted first transmission power and from the second antenna using the second transmission chain based on the adjusted second transmission power.

In an aspect, an apparatus for transmission by a time division duplexing (TDD) device is described. The apparatus may include means for receiving a communication on a frequency at a first antenna having a first receive condition and a second antenna having a second receive condition. The apparatus may include means for determining a first transmission conditioning value for the first antenna based on the first receive condition and a second transmission conditioning value based on the second receive condition. The first transmission conditioning value and the second transmission conditioning value may be weights associated with transmission power. The apparatus may include means for adjusting a first transmission power of the first antenna based on the first transmission conditioning value. The apparatus may include means for adjusting a second transmission power of the second antenna based on the second transmission conditioning value. The apparatus may include means for activating a first transmission chain associated with the first antenna and a second transmission chain associated with the second antenna. The first transmission chain may be associated with an active radio access technology or carrier and the second transmission chain may be associated with an inactive radio access technology or carrier. The apparatus may include means for sending the transmission from the first antenna using the first transmission chain based on the adjusted first transmission power and from the second antenna using the second transmission chain based on the adjusted second transmission power.

In an aspect, an apparatus for transmission by a time division duplexing (TDD) device is described. The apparatus may include at least one memory in communication with a communication module and a transmission conditioning module. The apparatus may include the communication module configured to receive a communication on a frequency at a first antenna having a first receive condition and a second antenna having a second receive condition. The apparatus may include the transmission conditioning module configured to determine a first transmission conditioning value for the first antenna based on the first receive condition and a second transmission conditioning value based on the second receive condition. The first transmission conditioning value and the second transmission conditioning value may be weights associated with transmission power. The communication module may be further configured to adjust a first transmission power of the first antenna based on the first transmission conditioning value, adjust a second transmission power of the second antenna based on the second transmission conditioning value, activate a first transmission chain associated with the first antenna and a second transmission chain associated with the second antenna, and send the transmission from the first antenna using the first transmission chain based on the adjusted first transmission power and from the second antenna using the second transmission chain based on the adjusted second transmission power. The first transmission chain may be associated with an active radio access technology or carrier and the second transmission chain may be associated with an inactive radio access technology or carrier; and

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a block diagram of a wireless communication system, including a base station and a user equipment, having and utilizing a number of antennas and a number of transmission chains that is fewer than the number of antennas and configured for time division duplexing (TDD) transmissions according to the present aspects;
FIG. 2 is a flow chart of a method for transmissions by a TDD device having and utilizing a number of antennas and a number of transmission chains that is fewer than the number of antennas, according to the present aspects;
FIG. 3 is a flow chart of another method for transmissions by a TDD device having and utilizing a number of antennas and a number of transmission chains that is fewer than the number of antennas, according to the present aspects;
FIG. 4 is a block diagram of a wireless communication system, including a base station and a user equipment, having and utilizing a number of antennas and an equal number of transmission chains and configured for TDD transmissions according to the present aspects;
FIG. 5 is a flow chart of a method for transmissions by a TDD device having and utilizing a number of antennas and an equal number of transmission chains according to the present aspects;
FIG. 6 is a block diagram illustrating an example of a telecommunications system configured for TDD transmissions according to the present aspects;
FIG. 7 is a block diagram illustrating an example of a channel structure in a telecommunications system configured for TDD transmissions according to the present aspects;
FIG. 8 is a block diagram illustrating an example of a Node B in communication with a user equipment in a telecommunications system configured for TDD transmissions according to the present aspects; and
FIG. 9 is a block diagram illustrating an example of a hardware implementation for an apparatus employing a processing system and configured for TDD transmissions according to the present aspects.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

Time division duplexing (TDD) may be used for communications between a user equipment (UE) and a network. A UE employing a traditional TDD system with a single, fixed antenna for transmissions, may experience reduced transmission quality, such as, for example, an undesirable number of unsuccessful communications to a network. Employing multiple antennas at a UE-with one or more than one transmission chain-may allow the UE to improve communications between the UE and a network.

In a TDD system, there may be channel reciprocity between uplink (UL) (transmit) and downlink (DL) (receive), as well as readily-determined channel quality metrics on multiple receive chains, including a primary data receive (PRx) chain and a diversity data receive (DRx) chain. Such channel quality metrics may include, for example, receive signal strength, transmit power, signal-to-noise ratio (SNR), and/or the like. In particular, received signal code power (RSCP) may be used as a quality metric in some communications systems (e.g., UMTS/CDMA) as the power measured by a receiver (e.g., UE) on a particular physical communication channel. RSCP may be used as an indication of signal strength, as a handover criteria, in DL power control, and/or to calculate path loss.

In an aspect, for a UE having and utilizing two antennas, and a single transmission chain, the UL/DL reciprocity and readily-observable channel quality metrics may be exploited to allow for quickly switching the transmission chain between the two antennas. Switching the transmission chain from one antenna to another may be based on whether one antenna is currently exhibiting a better performance characteristic (e.g., a higher percentage of successful transmissions, transmissions with better quality, and/or the like) than the other antenna. As such, a UE can achieve improvements in transmission quality and also may achieve savings in power consumption.

In another aspect, for a UE having and utilizing two antennas and two transmit chains, beamforming may be used to improve communications between the UE and a network. Beamforming, or spatial filtering, is a signal processing technique used for directional signal transmission and/or reception. Directional signal communication is achieved by combining elements in a phased array in such a way that signals at particular angles experience constructive interference, while signals at other angles experience destructive interference. Beamforming can be used at both transmitting and receiving ends of a system in order to achieve spatial selectivity. Any improvement gained by beamforming over omnidirectional reception/transmission is known as receive/transmit gain or loss.

Although aspects of the present disclosure are described with respect to a UE having and utilizing two antennas, the aspects may be implemented in a UE having and utilizing three or more antennas, using the same principles as described herein with respect to a UE having and utilizing two antennas.

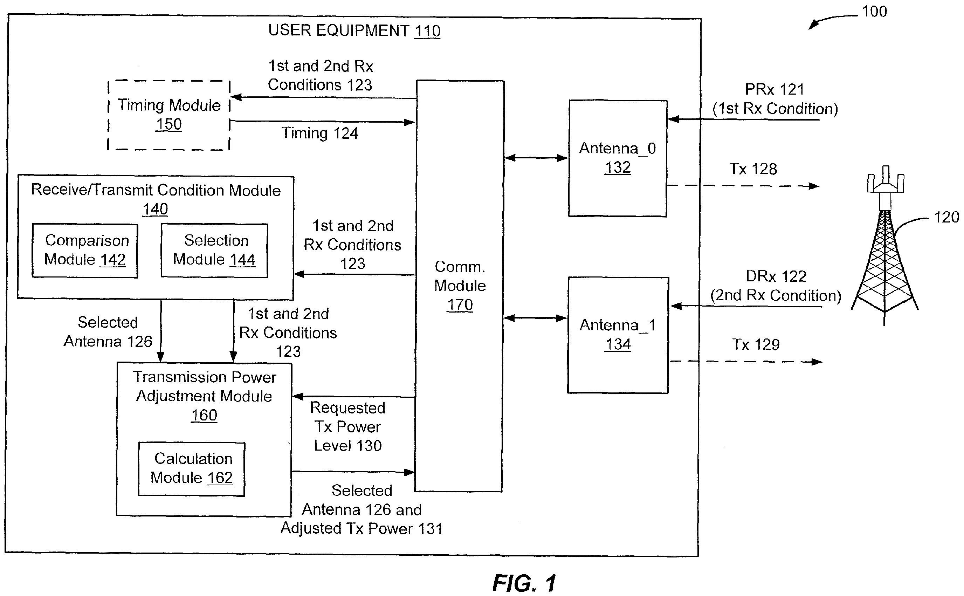

Referring to FIG. 1, a wireless communication system 100 includes a user equipment (UE) 110 in communication with a base station 120. UE 110 is a time division duplexing (TDD) device with two antennas, antenna_0 132 and antenna_1 134, and a single transmission chain (Tx), which may be used to transmit a signal on one of antenna_0 132, in which case the signal would be Tx 128, or antenna_1 134, in which case the signal would be Tx 129. A primary data receive signal PRx 121 is received by UE 110 on antenna_0 132. PRx 121 has a first receive condition. A diversity data receive signal DRx 122 is received by UE 110 on antenna_1 134. DRx 122 has a second receive condition. Both signals PRx 121 and DRx 122 are received from base station 120 on a frequency. According to TDD, UE 110 may send transmissions (e.g., Tx 128 on antenna_0 132 or Tx 129 on antenna_1 134) to base station 120 on the same frequency.

UE 110 includes communication module 170 configured to handle communications between UE 110 and base station 120 via antenna_0 132 and/or antenna_1 134. In an aspect, communication module 170 simultaneously receives signals PRx 121 and DRx 122, along with a first receive condition and a second receive condition, respectively. In another aspect, communication module 170 receives either signal PRx 121 or signal DRx 122 according to some receive antenna selection algorithm, function, or the like, when use of both receive antennas is not possible. The first receive condition and the second receive condition may be associated with reception quality at the antennas (e.g., the first receive condition may be associated with antenna_0 132 since PRx 121 was received at antenna_0 132 and the second receive condition may be associated with antenna_1 134 since DRx 122 was received at antenna_1 134), signal strength (e.g., power level) of PRx 121 and DRx 122, timing information (e.g., time-of-arrival from base station 120 to UE 110 for each of PRx 121 and DRx 122), or the like. Communication module 170 may be configured to communicate first and second receive conditions 123 to receive/transmit condition module 140.

TDD has both readily-observable channel quality metrics and uplink (UL)/downlink (DL) reciprocity. As such, quality information determined about a received signal, such as, for example, first and second receive conditions 123 may be used to determine quality information for sending signals (e.g., Tx 128 from antenna_0 132 or Tx 129 from antenna_1 134). In an aspect, UE 110 includes receive/transmit condition module 140 configured to determine a first transmit condition based on the first receive condition and a second transmit condition based on the second receive condition. More particularly, and for example, the first and second receive conditions 123 may be signal strengths associated with PRx 121 and DRx 122 (and, as such, antenna_0 132 and antenna_1 134, respectively), as such, receive/transmit condition module 140 may be configured to determine a first transmit condition and a second transmit condition, which may be a transmission powers, based on the signal strengths. In an aspect, some algorithm or function may be applied to each of the first receive condition and the second receive condition to determine the first transmit condition and the second transmit condition, respectively. In an aspect, the first transmit condition and the second transmit condition may be the same as the first receive condition and the second receive condition, respectively, especially when the UL and the DL are on the same working frequency in a TDD system.

Receive/transmit condition module 140 includes comparison module 142 and selection module 144. Comparison module 142 may be configured to compare the first transmit condition and the second transmit condition. The comparison may be a determination of which of antenna_0 132 and antenna_1 134 has a better performance characteristic, which may include, for example, a lower transmission power, a higher percentage of successful transmissions, or the like. A transmission may be deemed successful, for example, when an acknowledgment (ACK) (in contrast to a negative acknowledgment (NACK)) is received, from base station 120, in response to the transmission. Such performance characteristic may be determined based on the first transmit condition and the second transmit condition.

Receive/transmit condition module 140 includes selection module 144. Selection module 144 may be configured to communicate with comparison module 142 to receive results of the comparison and, based on the comparison, select one of antenna_0 132 or antenna_1 134 for sending a transmission. Receive/transmit condition module 140 may be configured to send the selected antenna 126 and the first and second receive conditions 123 to transmission power adjustment module 160.

In an example, UE 110 may be currently sending transmissions on antenna_0 132; however, and in the example, receive/transmit condition module 140 may determine that antenna_1 134 has a performance characteristic that is better than a performance characteristic of antenna_0 132 (currently in use). As such, and in the example, receive/transmit condition module 140 may select antenna_1 134 and communicate such selected antenna 126 to transmission power adjustment module 160.

UE 110 includes transmission power adjustment module 160 configured to receive a selected antenna 126 and first and second receive conditions 123 from receive/transmit condition module 140. Transmission power adjustment module 160 includes calculation module 162 configured to calculate a difference between antenna_0 132 receive power and antenna_1 134 receive power, which may be determined based on first and second receive conditions 123.

In response to calculating the difference, transmission power adjustment module 160 may be configured to adjust a transmission power of the selected antenna 126 based on the calculated difference. More particularly, transmission power adjustment module 160 may be configured to receive an indication from a network, via base station 120, as to a requested transmission power level 130 at which UE 110 should be sending transmissions (e.g., a particular power level). Transmission power adjustment module 160 may be configured to determine that by switching from an antenna, which has a worse uplink transmission channel, to the other antenna, which has a better uplink channel, it may overshoot the power level requested by the network. As such, transmission power adjustment module 160 may be configured to subtract the calculated difference in transmission power between the two antennas from the requested transmission power level. In an aspect, the transmission power of the selected antenna may be adjusted only if the selected antenna is an antenna other than the currently-transmitting antenna. For example, if UE 110 is currently transmitting on antenna_0 132 and the selected antenna is antenna_1 134, transmission power for antenna_1 134 may be adjusted. Transmission power adjustment module 160 may be configured to communicate the selected antenna and transmission power information 131 to communication module 170.

Using the same example, selected antenna 126 may be antenna_1 134 (as receive/transmit condition module 140 determined that antenna_1 134 had the better performance characteristic). Calculation module 162 may determine that antenna_1 134 has an uplink transmission channel that is 3 decibels (dB) (in terms of transmission power) better than the current transmission antenna_0 132, which means transmission power on the newly-selected antenna_1 134 may be 3 dB less power than the power being used on the current antenna. Transmission power adjustment module 160 may receive requested transmission power level 130 (or a power level adjustment factor) from the network, via base station 120, which indicates to UE 110 that the needed transmit power level on the current antenna_0 132 is 23 dBm. Based on the calculation and the indication of the requested transmit power level, in the example, transmission power adjustment module 160 may calculate that it should transmit (on antenna_1 134) at a transmission power of 20 dBm (e.g., 23 dBm - 3dBm = 20 dBm). As such, transmission power adjustment module 160 may communicate antenna_1 134 and 20 dBm as antenna and transmission power information 131 to communication module 170.

UE 110 may optionally include timing module 150 configured to adjust timing of transmissions from the selected one of antenan_0 132 and antenna_1 134. Timing module 150 may be configured to receive first and second receive conditions 123, which may include information related to time-of-arrival of a signal (e.g., PRx 121 and/or DRx 122). More particularly, and for example, time-of-arrival of a signal may indicate an amount of time that has elapsed between the signal being sent from base station 120 and being received by UE 110 at antenna_0 132 and/or antenna_1 134. More particularly, timing module 150 may determine a time-of-arrival associated with receiving PRx 121 on antenna_0 132 and a time-of-arrival associated with receiving DRx 122 on antenna_1 134. Timing module 150 may be configured to calculate a difference between the times-to-arrival and adjust the timing for the selected one of antenan_0 132 and antenna_1 134 for use when transmitting on the selected antenna. Timing module 150 may be configured to provide timing information 124, which may include a time delay, a time advance, a time difference, a specific time at which to transmit, or the like, to communication module 170.

In an example, timing module 150 may determine that PRx 121 was received at antenna_0 132 with a time-of-arrival of TO and DRx 122 was received at antenna_1 134 with a time-of-arrival of T1. As such, timing module 150 may calculate a difference of T0-T1=1 microseconds (µs). Timing module 150 may set the timing to take into account the extra 1 µs (e.g., the calculated difference) in order to ensure that transmitting from UE 110 accurately reflects receiving at UE 110. As such, timing module 150 may communicate timing information 124 of 1 µs to communication module 170.Communication module 170 may be configured to receive timing information 124 from timing module 150, and selected antenna 126 and adjusted transmission power information 131 from transmission power adjustment module 160. As such, communication module 170 may be configured to send a transmission on the selected one of antenna_0 132 (e.g., transmit Tx 128) or antenna_1 134 (e.g., transmit Tx 129) at the adjusted transmission power information 131 and with timing based on timing information 124.

In an aspect, despite adjustments that may be made as to which antenna of UE 110 is used to send transmissions to base station 120, communications received at UE 110 from base station 120 may continue to be received at the same antennas on which they have were being received-e.g., PRx 121 may continue to be received at antenna_0 132 and, simultaneously, DRx 122 may continue to be received on antenna_1 134. In other words, UE 110 receiving operations may not be affected by adjustments to UE 110 transmitting operations.

In an aspect, upon making adjustments to an antenna on which transmissions are sent by UE 110 to base station 120, UE 110 also may be configured to adjust on which antenna(s) it receives communications from base station 120-e.g., PRx 121 and/or DRx 122 may be received simultaneously on any combination of antenna_0 132 and/or antenna_1 134. In other words, UE 110 receiving operations may be affected by adjustments to UE 110 transmitting operations.

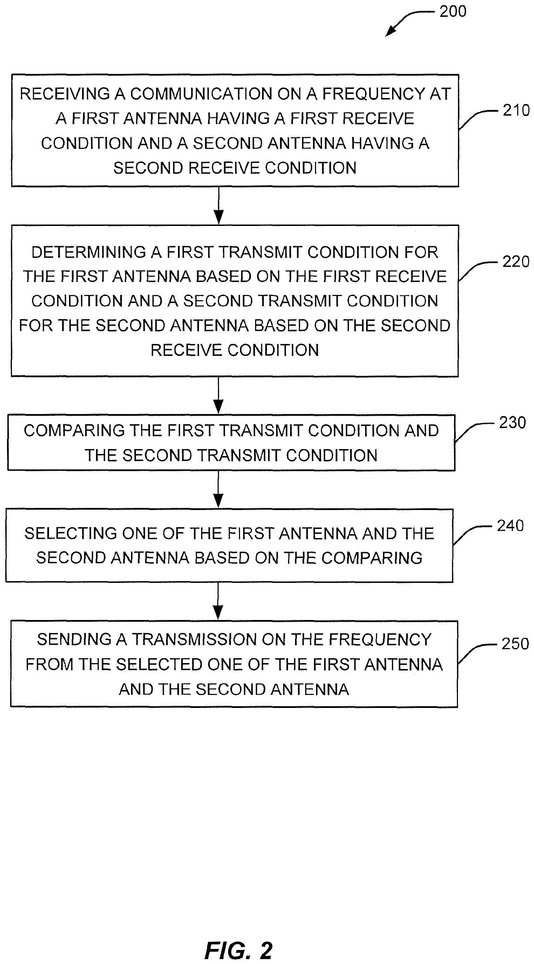

Referring to FIG. 2, aspects of a method 200 for transmission by time division duplexing (TDD) devices using one of multiple antennas may be performed by UE 110 of FIG. 1 to facilitate communication between UE 110 and base station 120. More particularly, receive/transmit condition module 140 comparison module 142, selection module 144, timing module 150, transmission power adjustment module 160, calculation module 162, and/or communication module 170 may be configured to perform the aspects of method 200.

At 210, method 200 includes receiving a communication on a frequency at a first antenna having a first receive condition and a second antenna having a second receive condition. In an aspect, UE 110 may be configured to receive a communication on a frequency at a first antenna having a first receive condition and a second antenna having a second receive condition. For example, UE 110 may receive a communication, including signals PRx 121 and DRx 122, which are received simultaneously on antenna_0 132 and antenna_1 134, respectively. PRx 121 may be associated with a first receive condition and DRx 122 may be associated with a second receive condition, which may be information related to signal strength, transmission power, time-of-arrival, or the like, regarding antenna_0 132 and antenna_1 134, respectively.

At 220, method 200 includes determining a first transmit condition for the first antenna based on the first receive condition and a second transmit condition for the second antenna based on the second receive condition. In an aspect, receive/transmit condition module 140 may be configured to determine a first transmit condition for the first antenna based on the first receive condition and a second transmit condition for the second antenna based on the second receive condition. TDD has both readily-observable channel quality metrics and uplink (UL)/downlink (DL) reciprocity. As such, quality information determined about a received signal (e.g., PRx 121 and DRx 122) may be used to determine quality information for sending signals (e.g., Tx 128 or Tx 129). For example, receive/transmit condition module 140 may be configured to receive first and second receive conditions 123 (e.g., a signal strength) from communication module 170 and, based on the first and second receive conditions 123 (e.g., the signal strength), determine a first transmit condition and a second transmit condition (e.g., transmission powers).

At 230, method 200 includes comparing the first transmit condition and the second transmit condition. In an aspect, comparison module 142 may be configured to compare the first transmit condition and the second transmit condition. The comparison may be a determination of which of antenna_0 132 and antenna_1 134 has a better performance characteristic, which may include, for example, transmission power, a higher percentage of successful transmissions, or the like. A transmission may be deemed successful, for example, when an acknowledgment (ACK) (in contrast to a negative acknowledgment (NACK)) is received, from base station 120, in response to the transmission. Such performance characteristic may be determined based on the first transmit condition and the second transmit condition.

At 240, method 200 includes selecting one of the first antenna and the second antenna based on the comparing. In an aspect, selection module 144 may be configured to select one of the first antenna and the second antenna based on the comparing. Selection module 144 may be configured to communicate with comparison module 142 to receive results of the comparison and, based on the comparison, select one of antenna_0 132 or antenna_1 134 for sending a transmission. Receive/transmit condition module 140 may be configured to send the selected antenna 126 and the first and second receive conditions 123 to transmission power adjustment module 160.

At 250, method 200 includes sending a transmission on the frequency from the selected one of the first antenna and the second antenna. In an aspect, communication module 170 may be configured to send a transmission on the frequency from the selected one of the first antenna and the second antenna. Communication module 170 may be configured to receive selected antenna 126 and adjusted transmission power information 131 from transmission power adjustment module 160. As such, communication module 170 may be configured to send a transmission on the selected one of antenna_0 132 (e.g., transmit Tx 128) or antenna_1 134 (e.g., transmit Tx 129) at the adjusted transmission power information 131.

Optionally (not shown), the method 200 may include calculating a difference between a first antenna receive power and a second antenna receive power. In an aspect, calculation module 162 may be configured to calculate a difference between a first antenna receive power and a second antenna receive power. For example calculation module 162 may be configured to calculate a difference between antenna_0 132 receive power and antenna_1 134 receive power, which may be determined based on first and second receive conditions 123.

In an example, selected antenna 126 may be antenna_1 134 (as receive/transmit condition module 140 determined that antenna_1 134 had the better performance characteristic). Calculation module 162 may determine that antenna_1 134 has a 3 decibels (dB) per one milliwatt (mW) (dBm) advantage over antenna_0 132 in a current transmission power.

Optionally (not shown), method 200 may include adjusting the transmission power of the selected one of the first antenna and the second antenna based on the calculated difference. Transmission power adjustment module 160 may be configured to determine that by switching from an antenna, which has a worse transmission channel, to the other antenna, which has a better channel condition, it may overshoot the power level requested by the network. In an aspect, the power level requested by the network may be based on the antenna with the worse transmission channel. For example, in response to calculating the difference, transmission power adjustment module 160 may be configured to adjust a transmission power of the selected antenna 126 based on the calculated difference. More particularly, transmission power adjustment module 160 may be configured to receive an indication from a network, via base station 120, as to a requested transmission power level 130 at which UE 110 should be sending transmissions (e.g., a particular power level). Transmission power adjustment module 160 may be configured to determine that by switching from an antenna with a lower receive power to the other antenna, which has a higher receive power, it may overshoot the power level requested by the network. As such, transmission power adjustment module 160 may be configured to subtract the calculated difference in transmission power between the two antennas from the requested transmission power level. In an aspect, the transmission power of the selected antenna may be adjusted only if the selected antenna is an antenna other than the currently-transmitting antenna. For example, if UE 110 is currently transmitting on antenna_0 132 and the selected antenna is antenna_1 134, transmission power for antenna_1 134 may be adjusted. Transmission power adjustment module 160 may be configured to communicate the selected antenna and transmission power information 131 to communication module 170.

In the same example, transmission power adjustment module 160 may receive requested transmission power level 130 from the network, via base station 120, which indicates to UE 110 that it is to transmit at a power level of 23 dBm. Based on the calculation and the indication of the requested transmit power level, in the example, transmission power adjustment module 160 may calculate that it should transmit (on antenna_1 134) at a transmission power of 20 dBm (e.g., 23 dBm - 3dBm = 20 dBm). As such, transmission power adjustment module 160 may communicate antenna_1 134 and 20 dBm, as antenna and transmission power information 131, to communication module 170.

Optionally (not shown), method 200 may include sending the transmission using the adjusted transmission power. In an aspect, communication module 170 may be configured to send the transmission using the adjusted transmission power. For example, communication module 170 may be configured to receive a selected antenna 126 and adjusted transmission power information 131 from transmission power adjustment module 160. As such, and in the current example, communication module 170 may be configured to send a transmission (Tx 129) on the selected antenna, antenna_1 134, at a transmission power of 20 dBm.

Optionally (not shown), method 200 may include determining a time-of-arrival associated with the receiving on the first antenna, determining a time-of-arrival associated with the receiving on the second antenna, calculating a difference between the time-of-arrival associated with the receiving on the first antenna and the time-of-arrival associated with the receiving on the second antenna, and adjusting timing associated with sending the based on the calculated difference, wherein the time-of-arrival may be an amount of time elapsed from when a signal leaves a base station to when the signal arrives at the device and transmission may be sent using the adjusted timing if the selected one of the first antenna and the second antenna is different than the selected antenna for a previous transmission. In an aspect, timing module 150 may be configured to determine a time-of-arrival associated with the receiving on the first antenna, determine a time-of-arrival associated with the receiving on the second antenna, calculate a difference between the time-of-arrival associated with the receiving on the first antenna and the time-of-arrival associated with the receiving on the second antenna, and adjust timing associated with sending based on the calculated difference, as described herein.

In an aspect, receive/transmit condition module 140 (via comparison module 142) may be configured to directly compare the first receive condition and the second receive condition and then communicate the results of the comparison to selection module 144, which may be configured to then select one of antenna_0 132 and antenna_1 134. After the selection, and in the aspect, receive/transmit condition module 140 may be configured to determine a transmit condition for the selected antenna based on the receive condition of the selected antenna. In this aspect, sending transmission Tx 128 on antenna_0 132 or sending transmission Tx 129 on antenna_1 134 may include configuring the transmission on the selected antenna based on the corresponding transmit condition of the selected antenna. For example, the first and second receive conditions 123 may be used directly to select one of antenna_0 132 and antenna_1 134 and then, once the selection has been made, a transmit condition for the selected antenna may be determined by receive/transmit condition module 140 (based on the corresponding receive condition). The determined transmit condition then may be used to configure the transmission from the selected antenna.

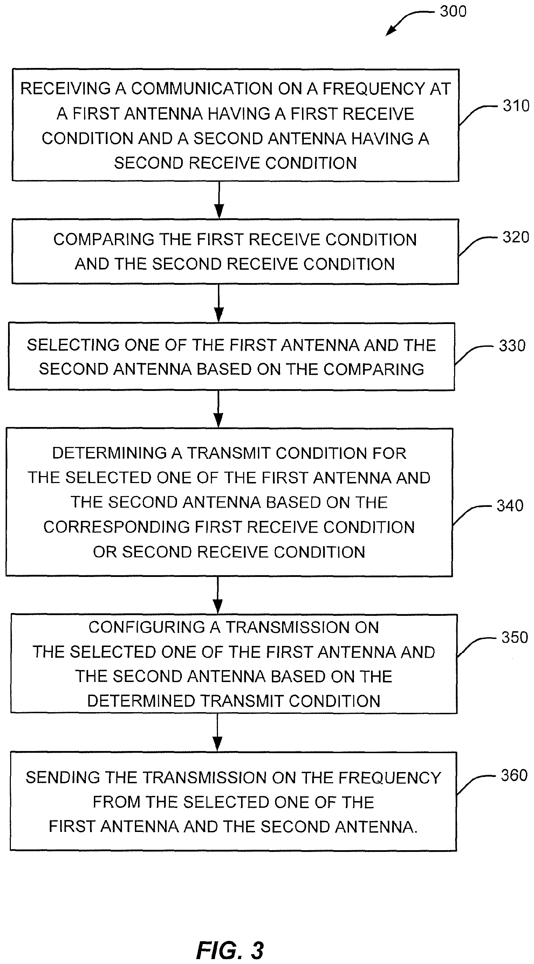

Referring to FIG. 3, aspects of a method 300 for transmission by time division duplexing (TDD) devices using one of multiple antennas may be performed by UE 110 of FIG. 1 to facilitate communication between UE 110 and base station 120. More particularly, receive/transmit condition module 140 comparison module 142, selection module 144, timing module 150, transmission power adjustment module 160, calculation module 162, and/or communication module 170 may be configured to perform aspects of method 300.

At 310, the method 300 includes receiving a communication on a frequency at a first antenna having a first receive condition and a second antenna having a second receive condition. In an aspect, and similar to operation 210 of method 200, UE 110 may be configured to receive a communication on a frequency at a first antenna having a first receive condition and a second antenna having a second receive condition. For example, UE 110 may receive a communication, including signals PRx 121 and DRx 122, which are received simultaneously on antenna_0 132 and antenna_1 134, respectively. PRx 121 may be associated with a first receive condition and DRx 122 may be associated with a second receive condition, which may be information related to signal strength, transmission power, time-of-arrival, or the like, regarding antenna_0 132 and antenna_1 134, respectively.

At 320, the method 300 includes comparing the first receive condition and the second receive condition. In an aspect, receive/transmit condition module and/or comparison module 142 may be configured to compare the first receive condition and the second receive condition. In an aspect, communication module 170 may communicate first and second receive conditions 123 to receive/transmit condition module 140, which may be configured via comparison module 142 to perform a comparison between the first receive condition and the second receive condition.

At 330, the method 300 includes selecting one of the first antenna and the second antenna based on the comparing. In an aspect, receive/transmit condition module 140 and/or selection module 144 may be configured to select one of the first antenna and the second antenna based on the comparing. For example, comparison module 142 may be configured to communicate a result of the comparison of the first and second receive conditions 123 to selection module 144. Based on the comparison result, selection module 144 may be configured to select antenna_0 132 or antenna_1 134 for sending a transmission.

At 340, the method 300 includes determining a transmit condition for the selected one of the first antenna and the second antenna based on the corresponding first receive condition or second receive condition. In an aspect, receive/transmit condition module 140 may be configured to determine a transmit condition for the selected one of the first antenna and the second antenna based on the corresponding first receive condition or second receive condition. In an example, if selection module 144 has selected antenna_0 132, receive/transmit condition module 140 may be configured to determine a transmit condition for antenna_0 132 based on the first receive condition, which corresponds to antenna_0 132.

At 350, the method 300 includes configuring a transmission on the selected one of the first antenna and the second antenna based on the determined transmit condition. In an aspect, communication module 170 may be configured to configure a transmission on the selected one of the first antenna and the second antenna based on the determined transmit condition. For example, receive/transmit condition module 140 may be configured to provide the selected antenna (e.g., antenna_0 132) and corresponding determined transmit condition to communication module 170. In response, communication module 170 may be configured to prepare to transmit on the selected antenna (e.g., antenna_0 132) based on the transmit condition.

At 360, the method 300 includes sending the transmission on the frequency from the selected one of the first antenna and the second antenna. In an aspect, communication module 170 may be configured to send the transmission on the frequency from the selected one of the first antenna and the second antenna. For example, communication module 170 may send Tx 128 on the selected antenna_0 132.

In an aspect, method 300 may be similar to method 200 of FIG. 2. However, method 300 may differ from method 200 in the order in which various aspects occur. In one example, in method 200, a first transmit condition and a second transmit condition are selected and then compared with one another in order to select an antenna for transmissions. In contrast, in method 300, an antenna is selected for transmissions and, based thereon, a transmit condition is determined for the selected antenna based on the receive condition associated with the selected antenna.

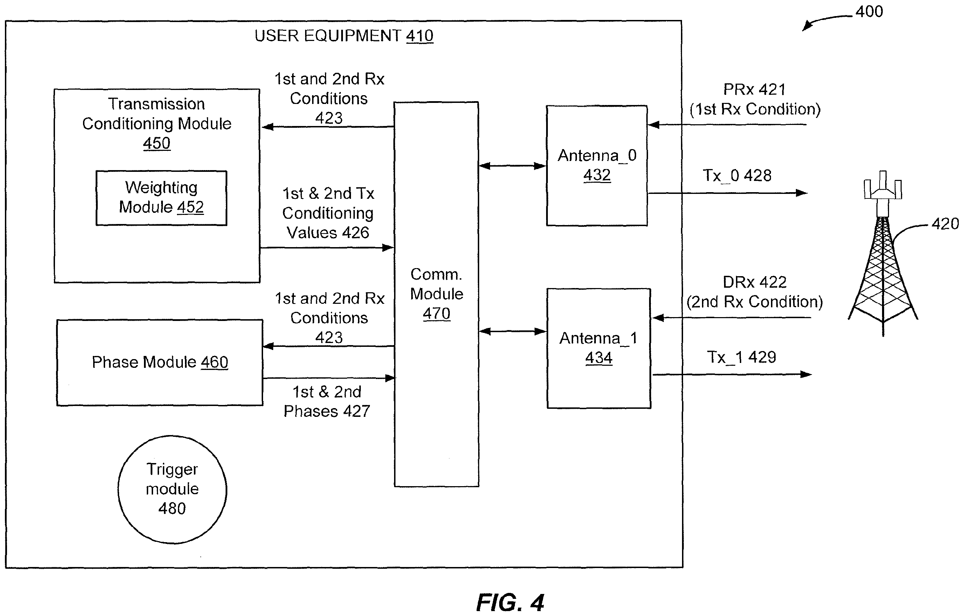

Referring to FIG. 4, a wireless communication system 400 includes a user equipment (UE) 410 in communication with a base station 420. UE 410, like UE 110 of FIG. 1, is a time division duplexing (TDD) device with two transmit antennas. Unlike UE 110 of FIG. 1, UE 410 has two transmission chains Tx_1 428 and Tx_2 429. As such, UE 410 may simultaneously, or in parallel, send a transmission Tx_0 428 from antenna_0 432 and send a transmission Tx_1 429 from antenna_1 434.

In an aspect, UE 410 also may be a multimode device such that UE 410 operates across multiple radio access technologies (RAT) and/or standards. As such, each of the two transmission chains Tx_1 428 and TX_2 429 of UE 410 may be associated with a different RAT. In a non-limiting example, transmission chain Tx_1 428 may be associated with a first RAT (e.g., GSM) and transmission chain Tx_2 429 may be associated with a second RAT (e.g., WCDMA). UE 410 may operate according to one RAT at a time such that a first RAT may be active and a second RAT may be inactive. In an aspect, an active RAT may "borrow" a transmission chain from the inactive RAT. As such, transmissions associated with an active RAT may be made using a transmission chain associated with the active RAT and a transmission chain associated with the inactive RAT in order for UE 410 to be able to send a transmission Tx_0 428 from antenna_0 432 and send a transmission Tx_1 429 from antenna_1 434 at the same time.

Similarly, in the case of carrier aggregation, when UE 410 is operating according to a single RAT (e.g., UE 410 is not a multimode device), UE 410 may still be configured to transmit on multiple carriers (e.g., uplink carriers) via multiple, corresponding, transmission chains (e.g., Tx_0 428 and Tx_1 429). In some scenarios, one or more of the possible carriers may be inactive and, as such, UE 410 may "borrow" a transmission chain from one or more inactive carrier. As such, transmissions by UE 410 may be made using a transmission chain associated with an active carrier and a transmission chain associated with an inactive carrier in order for UE 410 to be able to send a transmission Tx_0 428 from antenna_0 432 and send a transmission Tx_1 429 from antenna_1 434 at the same time.

A primary data receive signal PRx 421 is received by UE 410 on antenna_0 432 and a diversity data receive signal DRx 422 is received by UE 410 on antenna_1 434. PRx 421 is associated with a first receive condition and DRx 422 is associated with a second receive condition. The first receive condition and the second receive condition may be associated with reception quality at the antennas (e.g., the first receive condition may be associated with antenna_0 432 since PRx 421 was received at antenna_0 432 and the second receive condition may be associated with antenna_1 434 since DRx 422 was received at antenna_1 434), signal strength (e.g., power level) of PRx 421 and DRx 422, timing information (e.g., time-of-arrival from base station 420 to UE 410 for each of PRx 421 and DRx 422), or the like.

Both PRx 421 and DRx 422 are received on a frequency from base station 420. According to TDD, UE 410 may send transmissions (e.g., Tx_0 428 on antenna_0 132 and/or Tx_1 429 on antenna_1 134) to base station 420 on the same frequency.

UE 410 includes communication module 470 configured to handle communications between UE 410 and base station 420 via antenna_0 432 and/or antenna_1 434. In an aspect, communication module 470 receives signals PRx 421 and DRx 422, along with a first receive condition and a second receive condition, respectively. The first receive condition and the second receive condition may be associated with reception quality at the antennas (e.g., the first receive condition may be associated with antenna_0 432 since PRx 421 was received at antenna_0 432 and the second receive condition may be associated with antenna_1 434 since DRx 422 was received at antenna_1 434), signal strength (e.g., power level) of PRx 421 and DRx 422, phase information (e.g., a phase of signals PRx 421 and DRx 422 as received from base station 420 at UE 410), or the like. Communication module 470 may be configured to communicate first and second receive conditions 423 to transmission conditioning module 450.

TDD has both readily-observable channel quality metrics and uplink (UL)/downlink (DL) reciprocity. As such, quality information determined about a received signal, such as, for example, first and second receive conditions 423 may be used to determine quality information for sending signals (e.g., Tx 428 from antenna_0 432 and/or Tx 429 from antenna_1 434).

UE 410 includes transmission conditioning module 450 configured to determine a first transmission conditioning value for antenna_0 432 based on the first receive condition and a second transmission conditioning value for antenna_1 434 based on the second receive condition. In an aspect, transmission conditioning module 450 may be configured to determine whether antenna_0 432 or antenna_1 434 is performing better, e.g., has a better performance characteristic, than the other antenna. Transmission conditioning module 450 may do so by comparing the first receive condition and the second receive condition, determining whether one of the first receive condition and the second receive condition is above a performance threshold, or by applying some other algorithm or function to the first receive condition and the second receive condition.

In an aspect, a transmission conditioning value may be a weight (w), for example, applied to a transmit signal associated with an antenna in order to send a particular portion (e.g., a percentage) of a transmission via that antenna. Transmission conditioning module 450 includes weighting module 452 configured to determine a weight (w) for each of antenna_0 432 and antenna_1 434. Using a weight as a transmission conditioning value may allow UE 410 to transmit at a higher power related to a particular transmission by an antenna that is currently performing better than a different antenna. Transmission conditioning module 450 may be configured to communicate first and second transmission conditioning values 426 to communication module 470.

For example, if antenna_0 432 is currently performing better than antenna_1 434, transmission conditioning module 450 may determine to apply a weight (w_0) to antenna_0 432 of 0.8 (or 64%) and a complementary weight (w_1) to antenna_1 434 of 0.6 (or 36%). As such, and in the example, 64% of the transmit power may be sent via antenna_0 432 as Tx_0 428 and 34% of the transmit power may be sent via antenna_1 434 as Tx_1 429.

In an aspect, a particular antenna (e.g., antenna_0 432) may be determined to currently have a much better performance characteristic than the other antenna. In response to such determination, transmission conditioning module 450 may be configured to determine that only the better performing antenna should be used. To accomplish this, weighting module 452 may determine a weight (e.g., w_1) for an underperforming antenna (e.g., antenna_1 434) of zero, and set a weight (e.g., w_0) for a better performing antenna (e.g., antenna_0 432) to a non-zero value. As such, and in the example, a transmission (e.g., Tx_1 428) may be sent by UE 410 via only one antenna (e.g., antenna_0 432). In an aspect, transmission conditioning module 450 may be configured to apply equal weights to the two antennas such that antenna_0 432 may transmit Tx_0 428 and antenna_1 434 may transmit Tx_1 429 at the same (or similar) transmission power.

UE 410 includes phase module 460 configured to receive first and second receive conditions 423 from communication module 470 and determine first and second phases (p) 427 for each of antenna_0 432 and antenna_1 434, respectively in order to ensure that when transmissions sent from antenna_0 432 and antenna_1 434 arrive at base station 420, their phases align in such a way that they cause positive interference. Beamforming, or spatial filtering, is a signal processing technique used for directional signal transmission and/or reception. Directional signal communication is achieved by combining elements in a phased array in such a way that signals at particular angles experience constructive interference, while signals at other angles experience destructive interference. In order to effectively use beamforming to send signals from UE 410 to base station 420, the phase of the signals being transmitted via antenna_0 432 and antenna_1 434 should be such that the two signals will interfere in a positive way (e.g., to boost the transmission) upon arrival at the base station 120. For example, phase module 460 may determine current phase information for transmissions on antenna_0 432 and antenna_1 434 based on first and second receive conditions 423. In response to determining the phase information, phase module 460 may determine a first phase (p_0) for antenna_0 432 and a second phase (p_1) for antenna_1 434, which may be different from or the same as p_0.

In an aspect, both a weight (w) and a phase (p) may be applied to transmissions being sent by UE 410 in order to further improve the number of successful transmissions by UE 410. UE 410 may be configured to determine whether to use a weight (w), phase (p), both, or neither for transmissions being sent by UE 410, based on first and second receive conditions 423.

Communication module 470 may be configured to receive first and second transmission conditioning values 426 (e.g., weights) from transmission conditioning module 450 and first and second phases 427 from phase module 460. In an aspect, communication module 470 may be configured to adjust a first transmission power of antenna_0 432 based on the first transmission conditioning value and adjust a second transmission power of antenna_ 1 434 based on the second transmission conditioning value. In an aspect, the first transmission power and the second transmission power may be determined based on the first and second receive conditions 423.

In an aspect, communication module 470 may be configured to activate first transmission chain Tx_0 428 and second transmission chain Tx_1 429. Communication module 470 may be configured to determine which one of multiple RATs associated with UE 410 and/or carriers are currently active (e.g., which technology and carrier(s) UE 410 is currently using to communicate with a network) and activating a transmission chain associated with that RAT or carrier. Communication module 470 also may be configured to identify at least one inactive RAT or carrier (e.g., one or more RATs or carriers which UE 410 may use to communicate with the network, but are not currently being used to do so), and "borrow" a transmission chain from the inactive RAT or carrier. In a non-limiting example, a currently active RAT or carrier may be associated with Tx_0 428 and an inactive RAT or carrier may be associated with Tx_1 429. As such, communication module 470 may be configured to activate both Tx_0 428 and Tx_1 429 even though UE 410 is currently operating according to a RAT or carrier associated only with Tx_0 428.

As such, communication module 470 may be configured to send a transmission Tx_0 428 (e.g., using the first transmission chain associated with an active RAT or carrier) on aritenna_0 432 at a first adjusted transmission power with a first phase and a transmission Tx_1 429 (e.g., using the second transmission chain associated with an inactive RAT or carrier) on antenna_1 434 at a second adjusted transmission power with a second phase.

In an aspect, communication module 470 may be configured to transmit at a requested power level to the network via base station 420. As such, communication module 470 may be configured to ensure that the sum of the transmission power used to send transmissions via antenna_0 432 and antenna_1 434 is equal to the requested transmission power. In an aspect, communication module 470 may do so in a manner similar to that described with respect to FIGS. 1, 2, and/or 3. In an aspect, communication module 470 may do so in some other manner.

UE 410 includes trigger module 480 configured to determine when UE 410 should take advantage of some of the functionality described herein with respect to FIG. 4. In an aspect, although using beamforming techniques to send transmissions Tx_0 428 via antenna_0 432 and Tx_1 429 via antenna_1 434 of UE 410 may improve transmission performance, it may not necessarily improve power consumption by UE 410 (as in the aspects described with respect to FIGS. 1, 2, and/or 3) because, for example, UE 410 may be using an additional transmit chain to send transmissions via two antennas at all (or most) times. As such, it may not be desirable to use the functionality described herein with respect to FIG. 4 at all times. Rather, such functionality may be triggered to be used when increased transmission performance is desired and, more particularly, when an increase in transmission performance is prioritized over a potential decrease in power consumption. As such, trigger module 480 may be configured to determine when a trigger condition has occurred and trigger the functionality of FIG. 4 to be employed by UE 410 for transmissions.

Trigger module 480 may be configured to recognize that a trigger condition has occurred. Upon detection of a trigger condition, trigger module 480 may be configured to communicate with, and activate, transmission conditioning module 450 and/or phase module 460 such that the modules may perform the aspects described herein. Before trigger module 480 recognizes a trigger condition has occurred, and/or after an amount of time (which may be configurable or pre-set) has passed since a trigger condition was recognized, trigger module 480 may communicate with, and deactivate (or stop) transmission conditioning module 450 and/or phase module, 460 from performing the aspects described herein.

In an aspect, a trigger condition may be any situation when UE 410 has determined to prioritize improving transmission performance. For example, when UE 410 has a large amount of uplink (UL) data to send to base station 420-and, as such, seeks to prioritize transmission performance-it may begin to operate under HighSpeed Uplink Packet Access (HSUPA). As such, operation in HSUPA may be a trigger condition. In an example, a trigger condition may be determining that UE 410 has received more than a threshold number (which may be configurable or pre-set) of negative acknowledgments (NACKS), in response to its transmissions, from base station 420 and, as such, seeks to improve transmission performance. In an example, a trigger condition may be determining that a maximum transmit power limit (MTPL) has been met (e.g., UE 410 cannot transmit at a power higher than the level at which it is currently transmitting), but the network, via base station 420, is still requesting a transmission power increase. As such, improving transmission performance may obviate the disconnect. In an example, a trigger condition may be detecting that UE 410 is connected to a non-battery power source (e.g., is plugged into an outlet) and, as such, UE 410 can prioritize increased transmission performance without a concern for power consumption. Furthermore, any other scenario where UE 410 determines to prioritize transmission performance also may be considered a trigger condition. In an aspect, and despite making adjustments to the way in which UE 410 sends transmissions via antenna_0 432 and antenna_1 434, as a result of applying transmission conditioning values 426, communications received at UE 410 from base station 420 may continue to be received at the same antennas on which they have been received. For example, PRx 421 may continue to be received at antenna_0 432 and DRx 422 may continue to be received on antenna_1 434. In other words, UE 410 receiving operations may not be affected by adjustments to UE 410 transmitting operations.

In an aspect, upon making adjustments to the way in which UE 410 sends transmissions via antenna_0 432 and antenna_1 434, as a result of transmission conditioning values 426, UE 410 also may be configured to adjust on which antenna(s) it receives communications from base station 420. For example, PRx 421 and/or DRx 422 may be received on any combination of antenna_0 432 and/or antenna_1 434. In other words, UE 410 receiving operations may be affected by adjustments to UE 410 transmitting operations.

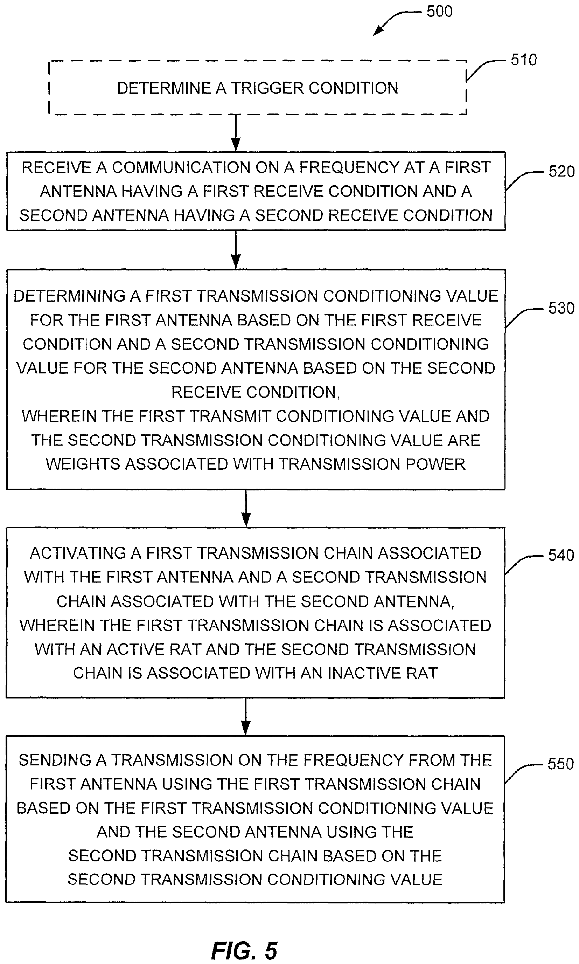

Referring to FIG. 5, aspects of a method 500 for transmission by time division duplexing (TDD) devices using at least one of multiple antennas may be performed by UE 510 of FIG. 4 to facilitate communication between UE 410 and base station 420. More particularly, transmission conditioning module 450, weighting module 452, phase module 460, communication module 470, and/or trigger module 480 may be configured to perform aspects of method 500.

At 510, method 500 optionally includes detecting a trigger condition. In an aspect, trigger module 480 may be configured to detect a trigger condition. In response to detecting a trigger condition, for example, trigger module 480 may be configured to trigger aspects of method 500 that may not occur without the occurrence of a trigger condition (e.g., under normal operating conditions of UE 410). In an aspect, a trigger condition may be determining that the TDD device has received more than a threshold percentage of negative acknowledgements in response to transmissions. In other aspects, a trigger condition may be determining that the TDD device is engaged in HSUPA, determining that the TDD device has received more than a threshold number of negative acknowledgments in response to transmissions, determining that a maximum transmit power limit has been met and receiving a request for increased transmission power, detecting that the TDD device is connected to a non-battery power source, and/or any other scenario where UE 410 determines to prioritize transmission performance.

At 520, method 500 includes receiving a communication on a frequency at a first antenna having a first receive condition and a second antenna having a second receive condition. In an aspect, UE 410 may be configured to receive a communication on a frequency at a first antenna having a first receive condition and a second antenna having a second receive condition. For example, UE 410 may receive a first communication, including signal PRx 421 on antenna_0 432 and DRx 422 on antenna_1 434. Each of signals PRx 421 and DRx 422 may have a receive condition, which may be information related to signal strength, transmission power, time-of-arrival, or the like, regarding antenna_0 432 and antenna_1 434, respectively.

At 530, method 500 includes determining a first transmission conditioning value for the first antenna based on the first receive condition and a second transmission conditioning value for the second antenna based on the second receive condition, wherein the first transmission conditioning value and the second transmission conditioning value are weights associated with transmission power. In an aspect, transmission conditioning module 450 may be configured to determine a first transmission conditioning value for the first antenna based on the first receive condition and a second transmission conditioning value for the second antenna based on the second receive condition. In an aspect, the first and second transmission conditioning values 426 may be a weight (w_0) determined for antenna_0 432 and a weight (w_1) determined for antenna_1 434. In an aspect, one weight (e.g., w_0) may be a non-zero value and the other weight (e.g., w_1) may be a zero value. In this case, only one of antenna_0 432 and antenna_1 434 may be used to send a transmission. In another aspect, the weights may have the same value (e.g., w_0 = w_1), such that the transmissions sent from antenna_0 432 and antenna_1 434 are sent with the same power.

At 540, the method 500 includes activating a first transmission chain associated with the first antenna and a second transmission chain associated with the second antenna, wherein the first transmission chain is associated with an active radio access technology or carrier and the second transmission chain is associated with an inactive radio access technology or carrier. In an aspect, communication module 470 may be configured to activate transmission chain TX_0 428, which may be associated with an active RAT or active carrier, and transmission chain Tx_1 429, which may be associated with an inactive RAT or inactive carrier. In other words, communication module 470 may be configured to "borrow" a transmission chain (e.g., Tx_1 429) associated with a RAT or carrier that is not currently active (e.g., not being used to communicate with a wireless network) by UE 410, to activate two transmission chains for transmissions by UE 410 when it is operating according to an active RAT and active carrier.

At 550, method 500 includes sending a transmission on the frequency from the first antenna using the first transmission chain based on the first transmission conditioning value and the second antenna using the second transmission chain based on the second transmission conditioning value. In an aspect, communication module 470 may be configured to send a transmission on the frequency from the first antenna using the first transmission chain Tx_0 428 based on the first transmission conditioning value and the second antenna using the second transmission chain Tx_1 429 based on the second transmission conditioning value.

Optionally (not shown), method 500 may include adjusting a first transmission power of the first antenna based on the first transmission conditioning value, adjusting a second transmission power of the second antenna based on the second transmission conditioning value, and sending the transmission from the first antenna based on the adjusted first transmission power and from the second antenna based on the adjusted second transmission power. In an aspect, communication module 470 may be configured to adjust a first transmission power of the first antenna based on the first transmission conditioning value, adjust a second transmission power of the second antenna based on the second transmission conditioning value, and send the transmission from the first antenna based on the adjusted first transmission power and from the second antenna based on the adjusted second transmission power as described herein.

For example, communication module 470 may be configured to receive first and second transmission conditioning values 426 (e.g., weights) from transmission conditioning module 450 and first and second phases 427 from phase module 460. In an aspect, communication module 470 may be configured to adjust a first transmission power of antenna_0 432 based on the first transmission conditioning value and adjust a second transmission power of antenna_ 1 434 based on the second transmission conditioning value. In an aspect, the first transmission power and the second transmission power may be determined based on the first and second receive conditions 423. As such, communication module 470 may be configured to send a transmission Tx_0 428 on antenna_0 432 at a first adjusted transmission power with a first phase and a transmission Tx_1 429 on antenna_1 434 at a second adjusted transmission power with a second phase.

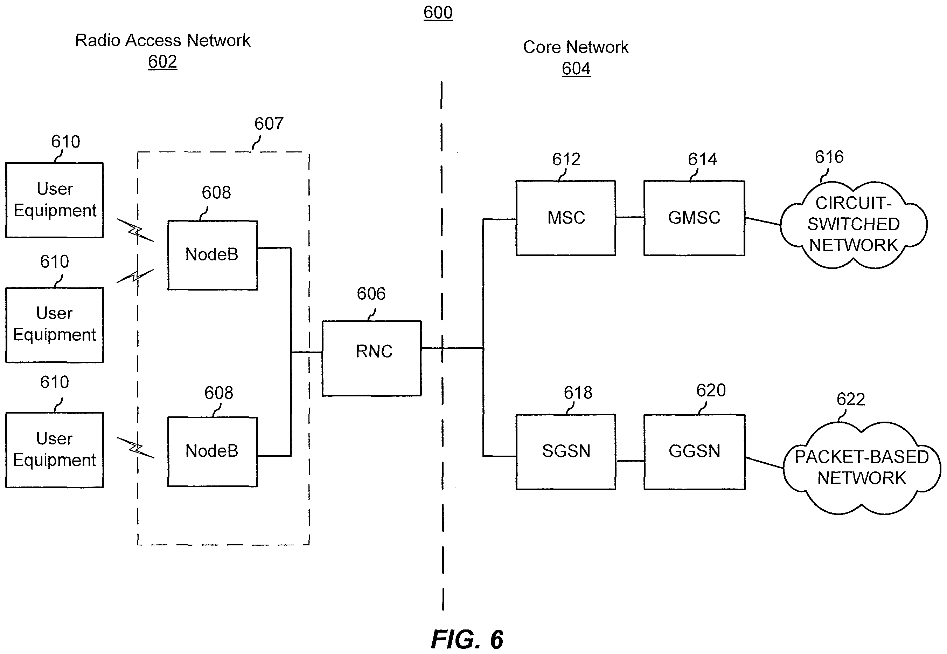

Turning now to FIG. 6, a block diagram is shown illustrating an example of a telecommunications system 600 in which UE 110 of FIG. 1 and/or UE 410 of FIG. 4 may operate and having aspects configured for TDD transmissions according to the present aspects. The various concepts presented throughout this disclosure may be implemented across a broad variety of telecommunication systems, network architectures, and communication standards. By way of example and without limitation, the aspects of the present disclosure illustrated in FIG. 6 are presented with reference to a UMTS system employing a TD-SCDMA standard. In this example, the UMTS system includes a (radio access network) RAN 602 (e.g., UTRAN) that provides various wireless services including telephony, video, data, messaging, broadcasts, and/or other services. The RAN 602 may be divided into a number of Radio Network Subsystems (RNSs) such as an RNS 607, each controlled by a Radio Network Controller (RNC) such as an RNC 606. For clarity, only the RNC 606 and the RNS 607 are shown; however, the RAN 602 may include any number of RNCs and RNSs in addition to the RNC 606 and RNS 607. The RNC 606 is an apparatus responsible for, among other things, assigning, reconfiguring and releasing radio resources within the RNS 607. The RNC 606 may be interconnected to other RNCs (not shown) in the RAN 602 through various types of interfaces such as a direct physical connection, a virtual network, or the like, using any suitable transport network.

The geographic region covered by the RNS 607 may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, two Node Bs 608 are shown; however, the RNS 607 may include any number of wireless Node Bs. The Node Bs 608 provide wireless access points to a core network 604 for any number of mobile apparatuses. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, or any other similar functioning device. The mobile apparatus is commonly referred to as user equipment (UE) in UMTS applications, but may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. For illustrative purposes, three UEs 610 are shown in communication with the Node Bs 608. The downlink (DL), also called the forward link, refers to the communication link from a Node B to a UE, and the uplink (UL), also called the reverse link, refers to the communication link from a UE to a Node B.

The core network 604, as shown, includes a GSM core network. However, as those skilled in the art will recognize, the various concepts presented throughout this disclosure may be implemented in a RAN, or other suitable access network, to provide UEs with access to types of core networks other than GSM networks.

In this example, the core network 604 supports circuit-switched services with a mobile switching center (MSC) 612 and a gateway MSC (GMSC) 614. One or more RNCs, such as the RNC 606, may be connected to the MSC 612. The MSC 612 is an apparatus that controls call setup, call routing, and UE mobility functions. The MSC 612 also includes a visitor location register (VLR) (not shown) that contains subscriber-related information for the duration that a UE is in the coverage area of the MSC 612. The GMSC 614 provides a gateway through the MSC 612 for the UE to access a circuit-switched network 616. The GMSC 614 includes a home location register (HLR) (not shown) containing subscriber data, such as the data reflecting the details of the services to which a particular user has subscribed. The HLR is also associated with an authentication center (AuC) that contains subscriber-specific authentication data. When a call is received for a particular UE, the GMSC 614 queries the HLR to determine the UE's location and forwards the call to the particular MSC serving that location.

The core network 604 also supports packet-data services with a serving GPRS support Node (SGSN) 618 and a gateway GPRS support Node (GGSN) 620. GPRS, which stands for General Packet Radio Service, is designed to provide packet-data services at speeds higher than those available with standard GSM circuit-switched data services. The GGSN 620 provides a connection for the RAN 602 to a packet-based network 622. The packet-based network 622 may be the Internet, a private data network, or some other suitable packet-based network. The primary function of the GGSN 620 is to provide the UEs 610 with packet-based network connectivity. Data packets are transferred between the GGSN 620 and the UEs 610 through the SGSN 618, which performs primarily the same functions in the packet-based domain as the MSC 612 performs in the circuit-switched domain.

The UMTS air interface is a spread spectrum Direct-Sequence Code Division Multiple Access (DS-CDMA) system. The spread spectrum DS-CDMA spreads user data over a much wider bandwidth through multiplication by a sequence of pseudorandom bits called chips. The TD-SCDMA standard is based on such direct sequence spread spectrum technology and additionally calls for a time division duplexing (TDD), rather than a frequency division duplexing (FDD) as used in many FDD mode UMTS/W-CDMA systems. TDD uses the same carrier frequency for both the uplink (UL) and downlink (DL) between a Node B 608 and a UE 610, but divides uplink and downlink transmissions into different time slots in the carrier.

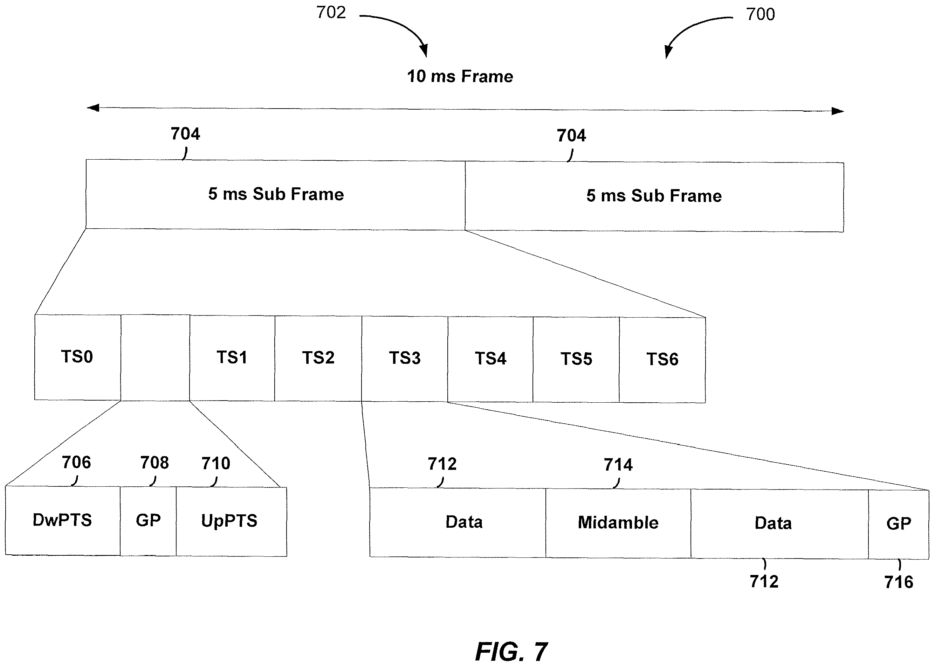

FIG. 7 shows a frame structure 700 for a TD-SCDMA carrier that may be used by UE 110 of FIG. 1 and/or UE 410 of FIG. 4, each of which may have aspects configured for TDD transmissions according to the present aspects, when communicating with base station 120 of FIG. 1 and/or base station 420 of FIG. 4, respectively. The TD-SCDMA carrier, as illustrated, has a frame 702 that is 50 ms in length. The frame 702 has two 5 ms subframes 704, and each of the subframes 704 includes seven time slots, TS0 through TS6. The first time slot, TS0, is usually allocated for downlink communication, while the second time slot, TS1, is usually allocated for uplink communication. The remaining time slots, TS2 through TS6, may be used for either uplink or downlink, which allows for greater flexibility during times of higher data transmission times in either the uplink or downlink directions. A downlink pilot time slot (DwPTS) 706, a guard period (GP) 708, and an uplink pilot time slot (UpPTS) 710 (also known as the uplink pilot channel (UpPCH)) are located between TS0 and TS1. Each time slot, TS0-TS6, may allow data transmission multiplexed on a maximum of 56 code channels. Data transmission on a code channel includes two data portions 712 separated by a midamble 714 and followed by a guard period (GP) 716. The midamble 714 may be used for features, such as channel estimation, while the GP 716 may be used to avoid inter-burst interference.

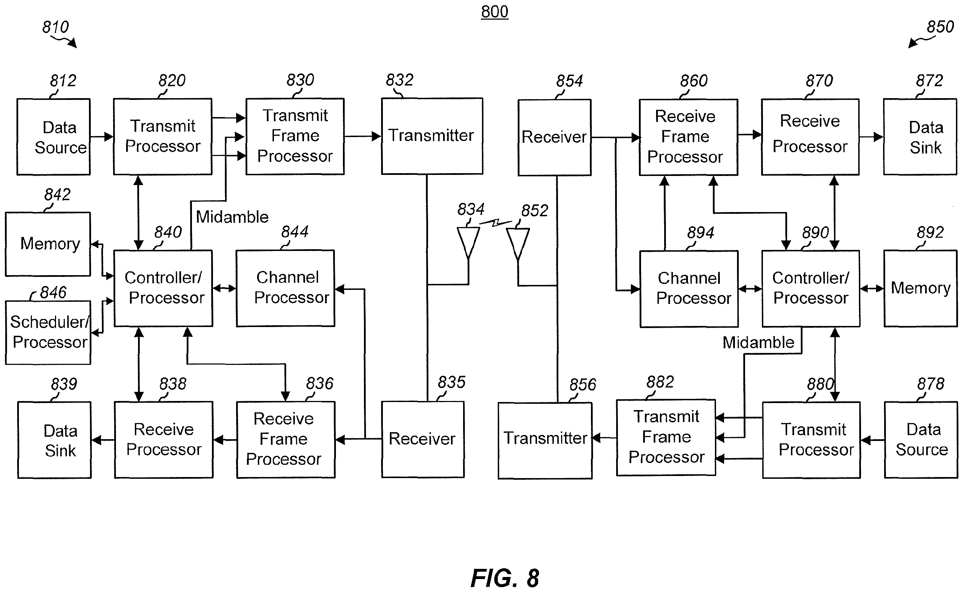

FIG. 8 is a block diagram of a Node B 810 in communication with a UE 850 in a RAN 800 having aspects configured for TDD transmissions according to the present aspects. The RAN 800 may be the RAN 602 of FIG. 6, the Node B 810 may be the Node B 608 of FIG. 6, base station 420 of FIG. 4 and/or base station 120 of FIG. 1, and the UE 850 may be the UE 610 of FIG. 6 UE 410 of FIG. 4 and/or UE 110 of FIG. 1. In the downlink communication, a transmit processor 820 may receive data from a data source 812 and control signals from a controller/processor 840. The transmit processor 820 provides various signal processing functions for the data and control signals, as well as reference signals (e.g., pilot signals). For example, the transmit processor 820 may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 844 may be used by a controller/processor 840 to determine the coding, modulation, spreading, and/or scrambling schemes for the transmit processor 820. These channel estimates may be derived from a reference signal transmitted by the UE 850 or from feedback contained in the midamble 714 (FIG. 7) from the UE 850. The symbols generated by the transmit processor 820 are provided to a transmit frame processor 830 to create a frame structure. The transmit frame processor 830 creates this frame structure by multiplexing the symbols with a midamble 714 (FIG. 7) from the controller/processor 840, resulting in a series of frames. The frames are then provided to a transmitter 832, which provides various signal conditioning functions including amplifying, filtering, and modulating the frames onto a carrier for downlink transmission over the wireless medium through smart antennas 834. The smart antennas 834 may be implemented with beam steering bidirectional adaptive antenna arrays or other similar beam technologies.

At the UE 850, a receiver 854 receives the downlink transmission through antennas 852 and processes the transmission to recover the information modulated onto the carrier. The information recovered by the receiver 854 is provided to a receive frame processor 860, which parses each frame, and provides the midamble 714 (FIG. 7) to a channel processor 894 and the data, control, and reference signals to a receive processor 870. The receive processor 870 then performs the inverse of the processing performed by the transmit processor 820 in the Node B 810. More specifically, the receive processor 870 descrambles and despreads the symbols, and then determines the most likely signal constellation points transmitted by the Node B 810 based on the modulation scheme. These soft decisions may be based on channel estimates computed by the channel processor 894. The soft decisions are then decoded and deinterleaved to recover the data, control, and reference signals. The CRC codes are then checked to determine whether the frames were successfully decoded. The data carried by the successfully decoded frames will then be provided to a data sink 872, which represents applications running in the UE 850 and/or various user interfaces (e.g., display). Control signals carried by successfully decoded frames will be provided to a controller/processor 890. When frames are unsuccessfully decoded by the receiver processor 870, the controller/processor 890 may also use an acknowledgement (ACK) and/or negative acknowledgement (NACK) protocol to support retransmission requests for those frames.

In the uplink, data from a data source 878 and control signals from the controller/processor 890 are provided to a transmit processor 880. The data source 878 may represent applications running in the UE 850 and various user interfaces (e.g., keyboard). Similar to the functionality described in connection with the downlink transmission by the Node B 810, the transmit processor 880 provides various signal processing functions including CRC codes, coding and interleaving to facilitate FEC, mapping to signal constellations, spreading with OVSFs, and scrambling to produce a series of symbols. Channel estimates, derived by the channel processor 894 from a reference signal transmitted by the Node B 810 or from feedback contained in the midamble transmitted by the Node B 810, may be used to select the appropriate coding, modulation, spreading, and/or scrambling schemes. The symbols produced by the transmit processor 880 will be provided to a transmit frame processor 882 to create a frame structure. The transmit frame processor 882 creates this frame structure by multiplexing the symbols with a midamble 714 (FIG. 7) from the controller/processor 890, resulting in a series of frames. The frames are then provided to a transmitter 856, which provides various signal conditioning functions including amplification, filtering, and modulating the frames onto a carrier for uplink transmission over the wireless medium through the antennas 852.

The uplink transmission is processed at the Node B 810 in a manner similar to that described in connection with the receiver function at the UE 850. A receiver 835 receives the uplink transmission through the antenna 834 and processes the transmission to recover the information modulated onto the carrier. The information recovered by the receiver 835 is provided to a receive frame processor 836, which parses each frame, and provides the midamble 714 (FIG. 7) to the channel processor 844 and the data, control, and reference signals to a receive processor 838. The receive processor 838 performs the inverse of the processing performed by the transmit processor 880 in the UE 850. The data and control signals carried by the successfully decoded frames may then be provided to a data sink 839 and the controller/processor, respectively. If some of the frames were unsuccessfully decoded by the receive processor, the controller/processor 840 may also use an acknowledgement (ACK) and/or negative acknowledgement (NACK) protocol to support retransmission requests for those frames.

The controller/processors 840 and 890 may be used to direct the operation at the Node B 810 and the UE 850, respectively. For example, the controller/processors 840 and 890 may provide various functions including timing, peripheral interfaces, voltage regulation, power management, and other control functions. The computer readable media of memories 842 and 892 may store data and software for the Node B 810 and the UE 850, respectively. A scheduler/processor 846 at the Node B 810 may be used to allocate resources to the UEs and schedule downlink and/or uplink transmissions for the UEs.

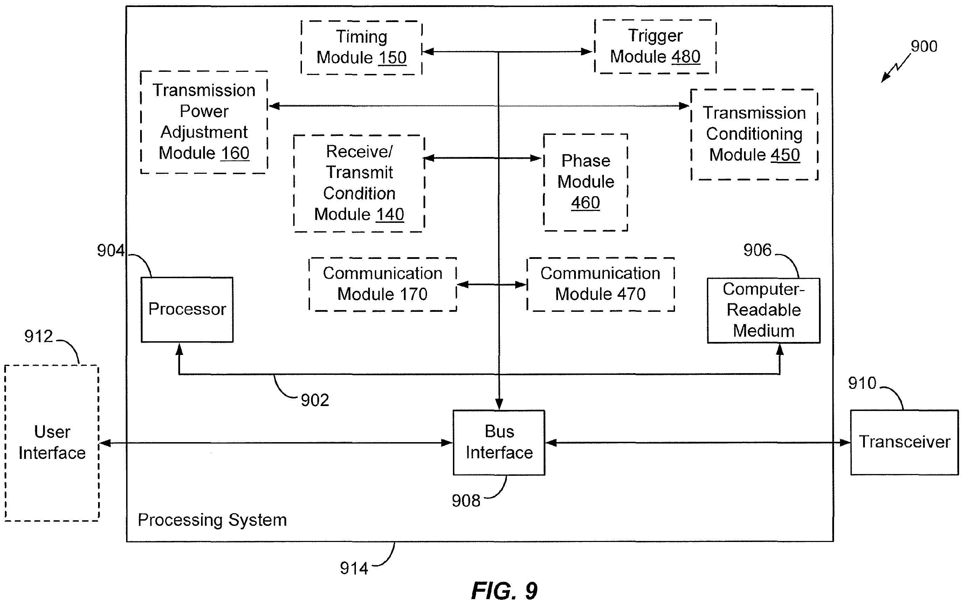

FIG. 9 is a block diagram illustrating an example of a hardware implementation for an apparatus 900 employing a processing system 914. The apparatus may be, in one example, UE 110 of FIG. 1 or UE 410 of FIG. 4, each of which has aspects configured for TDD transmissions according to the present aspects.

In this example, the processing system 914 may be implemented with a bus architecture, represented generally by the bus 902. The bus 902 may include any number of interconnecting buses and bridges depending on the specific application of the processing system 114 and the overall design constraints. The bus 902 links together various circuits including one or more processors, represented generally by the processor 904, and computer-readable media, represented generally by the computer-readable medium 906. In an aspect where apparatus 900 is UE 110 of FIG. 1, the bus 902 also may link receive/transmit condition module 140, timing module 150, transmission power adjustment module 160, and/or communication module 170, having the functions and sub-components described herein. In an aspect where apparatus 900 is UE 410 of FIG. 4, the bus 902 also may link transmission conditioning module 450, phase module 460, communication module 470, and/or trigger module 480, having the functions and sub-components described herein.

The bus 902 may also link various other circuits such as timing sources, peripherals, voltage regulators, and power management circuits, which are well known in the art, and therefore, will not be described any further. A bus interface 908 provides an interface between the bus 902 and a transceiver 910. The transceiver 910 provides a means for communicating with various other apparatus over a transmission medium. Depending upon the nature of the apparatus, a user interface 912 (e.g., keypad, display, speaker, microphone, joystick) may also be provided.

The processor 904 is responsible for managing the bus 902 and general processing, including the execution of software stored on the computer-readable medium 906. The software, when executed by the processor 904, causes the processing system 914 to perform the various functions described herein, including the functions represented by any of receive/transmit condition module 140, timing module 150, transmission power adjustment module 160, and/or communication module 170 (for an aspect where apparatus 900 is UE 110 of FIG. 1), and/or transmission conditioning module 450, phase module 460, communication module 470, and/or trigger module 480, having the functions and sub-components described herein (for an aspect where apparatus 900 is UE 410 of FIG. 4). The computer-readable medium 906 may also be used for storing data that is manipulated by the processor 904 when executing software.

Several aspects of a telecommunications system has been presented with reference to a TD-SCDMA system. As those skilled in the art will readily appreciate, various aspects described throughout this disclosure may be extended to other telecommunication systems, network architectures and communication standards. By way of example, various aspects may be extended to other UMTS systems such as W-CDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM□, etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (e.g., mobile-to-mobile) *ad hoc* network systems often using unpaired unlicensed spectrums, 802.xx wireless LAN, BLUETOOTH and any other short- or long- range, wireless communication techniques.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method for transmission by a time division duplexing (TDD) device, comprising:
receiving (210) a communication on a frequency at a first antenna having a first receive condition and a second antenna having a second receive condition;
determining (220) a first transmit condition for the first antenna based on the first receive condition and a second transmit condition for the second antenna based on the second receive condition;
comparing (230) the first transmit condition and the second transmit condition;
selecting (240) one of the first antenna and the second antenna based on the comparing;
the method being **characterized by** further comprising
calculating a difference between a first antenna receive power and a second antenna receive power;
adjusting a transmission power of the selected one of the first antenna and the second antenna based on the calculated difference, and
sending (250) a transmission on the frequency from the selected one of the first antenna and the second antenna, wherein the sending comprises sending the transmission using the adjusted transmission power, wherein the sending comprises sending the transmission using the adjusted transmission power if the selected one of the first antenna and the second antenna is different than the selected antenna for a previous transmission.

2. The method of claim 1, wherein the first antenna receive power and the second antenna receive power are received signal code power (RSCP) or reference signal received power (RSRP).

3. The method of claim 1, wherein the adjusting further comprises:
receiving an indication of a requested transmit power level; and
setting the adjusted transmission power equal to the requested transmit power level less the calculated difference.

4. The method of claim 1, further comprising:
determining a time-of-arrival associated with the receiving on the first antenna;
determining a time-of-arrival associated with the receiving on the second antenna;
calculating a difference between the time-of-arrival associated with the receiving on the first antenna and the time-of-arrival associated with the receiving on the second antenna; and
adjusting timing associated with the sending based on the calculated difference, wherein the sending comprises sending the transmission using the adjusted timing if the selected one of the first antenna and the second antenna is different than the selected antenna for a previous transmission.

5. A computer program product for transmission by a time division duplexing (TDD) device, comprising code which when executed undertakes the method of any of claims 1 to 4.

6. An apparatus for transmission by a time division duplexing (TDD) device, comprising:
means (170) for receiving a communication on a frequency at a first antenna (132) having a first receive condition and a second antenna (134) having a second receive condition;
means (140) for determining a first transmit condition for the first antenna based on the first receive condition and a second transmit condition for the second antenna based on the second receive condition;
means (142) for comparing the first transmit condition and the second transmit condition;
means (144) for selecting one of the first antenna and the second antenna based on the comparing;
the apparatus being **characterized by** further comprising
means (160) for calculating a difference between a first antenna receive power and a second antenna receive power;
means (160) for adjusting a transmission power of the selected one of the first antenna and the second antenna based on the calculated difference, and
means (170) for sending a transmission on the frequency from the selected one of the first antenna and the second antenna, wherein the sending comprises sending the transmission using the adjusted transmission power, wherein the means for sending is configured to send the transmission using the adjusted transmission power if the selected one of the first antenna and the second antenna is different than the selected antenna for a previous transmission..

7. The apparatus of claim 6, wherein the first antenna receive power and the second antenna receive power are received signal code power (RSCP) or reference signal received power (RSRP).

8. The apparatus of claim 6, wherein the means for adjusting a transmission power is configured to:
receive an indication of a requested transmit power level; and
set the adjusted transmission power equal to the requested transmit power level less the calculated difference.

9. The apparatus of claim 7, wherein the means for determining receive/transmit is further configured to:
determine a time-of-arrival associated with the receiving on the first antenna;
determine a time-of-arrival associated with the receiving on the second antenna;
calculate a difference between the time-of-arrival associated with the receiving on the first antenna and the time-of-arrival associated with the receiving on the second antenna; and
adjust timing associated with the sending based on the calculated difference, wherein the communication module being configured to send comprises the communication module configured to send the transmission using the adjusted timing if the selected one of the first antenna and the second antenna is different than the selected antenna for a previous transmission.

## Patentansprüche

1. Verfahren zum Übertragen mit einem TDD-(Time Division Duplexing)-Gerät, das Folgendes beinhaltet:
Empfangen (210) einer Kommunikation auf einer Frequenz an einer ersten Antenne mit einer ersten Empfangsbedingung und einer zweiten Antenne mit einer zweiten Empfangsbedingung;
Bestimmen (220) einer ersten Übertragungsbedingung für die erste Antenne auf der Basis der ersten Empfangsbedingung und einer zweiten Übertragungsbedingung für die zweite Antenne auf der Basis der zweiten Empfangsbedingung;
Vergleichen (230) der ersten Übertragungsbedingung und der zweiten Übertragungsbedingung;
Auswählen (240) der ersten Antenne oder der zweiten Antenne auf der Basis des Vergleichs;
wobei das Verfahren **dadurch gekennzeichnet ist, dass** es Folgendes beinhaltet:
Berechnen einer Differenz zwischen einer ersten Antennenempfangsleistung und einer zweiten Antennenempfangsleistung;
Justieren einer Übertragungsleistung der ausgewählten einen aus erster Antenne und zweiter Antenne auf der Basis der berechneten Differenz, und
Senden (250) einer Übertragung auf der Frequenz von der ausgewählten einen aus erster und zweiter Antenne, wobei das Senden das Senden der Übertragung mit der justierten Übertragungsleistung beinhaltet, wobei das Senden das Senden der Übertragung mit der justierten Übertragungsleistung beinhaltet, wenn sich die ausgewählte eine aus erster und zweiter Antenne von der für eine vorherige Übertragung ausgewählten Antenne unterscheidet.

2. Verfahren nach Anspruch 1, wobei die erste Antennenempfangsleistung und die zweite Antennenempfangsleistung Empfangssignalcodeleistung (RSCP) oder Referenzsignalempfangsleistung (RSRP) sind.

3. Verfahren nach Anspruch 1, wobei das Justieren ferner Folgendes beinhaltet:
Empfangen einer Anzeige eines angeforderten Übertragungsleistungspegels; und
Einstellen der justierten Übertragungsleistung auf gleich den angeforderten Übertragungsleistungspegel minus der berechneten Differenz.

4. Verfahren nach Anspruch 1, das ferner Folgendes beinhaltet:
Bestimmen einer Ankunftszeit, die mit dem Empfang an der ersten Antenne assoziiert ist;
Bestimmen einer Ankunftszeit, die mit dem Empfang an der zweiten Antenne assoziiert ist;
Berechnen einer Differenz zwischen der mit dem Empfang an der ersten Antenne assoziierten Ankunftszeit und der mit dem Empfang an der zweiten Antenne assoziierten Ankunftszeit; und
Justieren des mit dem Senden assoziierten Timings auf der Basis der berechneten Differenz, wobei das Senden das Senden der Übertragung mit dem justierten Timing beinhaltet, wenn sich die ausgewählte eine aus erster Antenne und zweiter Antenne von der für eine vorherige Übertragung ausgewählten Antenne unterscheidet.

5. Computerprogrammprodukt zur Übertragung mit einem TDD-(Time Division Duplexing)-Gerät, das Code umfasst, der bei Ausführung das Verfahren nach einem der Ansprüche 1 bis 4 durchführt.

6. Vorrichtung zur Übertragung mit einem TDD-(Time Division Duplexing)-Gerät, die Folgendes umfasst:
Mittel (170) zum Empfangen einer Kommunikation auf einer Frequenz an einer ersten Antenne (132) mit einer ersten Empfangsbedingung und einer zweiten Antenne (134) mit einer zweiten Empfangsbedingung;
Mittel (140) zum Bestimmen einer ersten Übertragungsbedingung für die erste Antenne auf der Basis der ersten Empfangsbedingung und einer zweiten Übertragungsbedingung für die zweite Antenne auf der Basis der zweiten Empfangsbedingung;
Mittel (142) zum Vergleichen der ersten Übertragungsbedingung und der zweiten Übertragungsbedingung;
Mittel (144) zum Auswählen von einer aus der ersten Antenne und der zweiten Antenne auf der Basis des Vergleichs;
wobei die Vorrichtung **dadurch gekennzeichnet ist, dass** sie ferner Folgendes umfasst:
Mittel (160) zum Berechnen einer Differenz zwischen einer ersten Antennenempfangsleistung und einer zweiten Antennenempfangsleistung;
Mittel (160) zum Justieren einer Übertragungsleistung der ausgewählten einen aus erster Antenne und zweiter Antenne auf der Basis der berechneten Differenz, und
Mittel (170) zum Senden einer Übertragung auf der Frequenz von der ausgewählten einen aus erster und zweiter Antenne, wobei das Senden das Senden der Übertragung mit der justierten Übertragungsleistung beinhaltet, wobei das Mittel zum Senden der Übertragung mit der justierten Übertragungsleistung beinhaltet, wenn sich die ausgewählte eine aus erster und zweiter Antenne von der für eine vorherige Übertragung ausgewählten Antenne unterscheidet.

7. Vorrichtung nach Anspruch 6, wobei die erste Antennenempfangsleistung und die zweite Antennenempfangsleistung Empfangssignalcodeleistung (RSCP) oder Referenzsignalempfangsleistung (RSRP) sind.

8. Vorrichtung nach Anspruch 6, wobei das Mittel zum Justieren einer Übertragungsleistung konfiguriert ist zum:
Empfangen einer Anzeige eines angeforderten Übertragungsleistungspegels; und
Einstellen der justierten Übertragungsleistung auf gleich den angeforderten Übertragungsleistungspegel minus der berechneten Differenz.

9. Vorrichtung nach Anspruch 7, wobei das Mittel zum Bestimmen von Empfang/Übertragung ferner konfiguriert ist zum:
Bestimmen einer mit dem Empfang an der ersten Antenne assoziierten Ankunftszeit;
Bestimmen einer mit dem Empfang an der zweiten Antenne assoziierten Ankunftszeit;
Berechnen einer Differenz zwischen der mit dem Empfang an der ersten Antenne assoziierten Ankunftszeit und der mit dem Empfang an der zweiten Antenne assoziierten Ankunftszeit; und
Justieren des mit dem Senden assoziierten Timings auf der Basis der berechneten Differenz, wobei das zum Senden konfigurierte Kommunikationsmodul das zum Senden der Übertragen konfigurierte Kommunikationsmodul mit dem justierten Timing umfasst, wenn sich die ausgewählte eine aus erster Antenne und zweiter Antenne von der ausgewählten Antenne für eine vorherige Übertragung unterscheidet.

## Revendications

1. Procédé de transmission par un dispositif à duplexage par répartition dans le temps (TDD), comprenant :
la réception (210) d'une communication sur une fréquence au niveau d'une première antenne présentant une première condition de réception et d'une seconde antenne présentant une seconde condition de réception ;
la détermination (220) d'une première condition d'émission de la première antenne sur la base de la première condition de réception et d'une seconde condition d'émission de la seconde antenne sur la base de la seconde condition de réception ;
la comparaison (230) de la première condition d'émission et de la seconde condition d'émission ;
la sélection (240) d'une de la première antenne et de la seconde antenne sur la base de la comparaison ;
le procédé étant **caractérisé en ce qu'**il comprend en outre
le calcul d'une différence entre une puissance de réception de première antenne et une puissance de réception de seconde antenne ;
l'ajustement d'une puissance d'émission de l'antenne sélectionnée de la première antenne et de la seconde antenne sur la base de la différence calculée, et
l'envoi (250) d'une transmission sur la fréquence à partir de l'antenne sélectionnée de la première antenne et de la seconde antenne, l'envoi comprenant l'envoi de la transmission en utilisant la puissance d'émission ajustée, si l'antenne sélectionnée de la première antenne et de la seconde antenne est différente de l'antenne sélectionnée pour une transmission précédente.

2. Procédé selon la revendication 1, dans lequel la puissance de réception de première antenne et la puissance de réception de seconde antenne sont une puissance de code de signal reçu (RSCP) ou une puissance reçue de signal de référence (RSRP).

3. Procédé selon la revendication 1, dans lequel l'ajustement comprend en outre :
la réception d'une indication d'un niveau de puissance émise requis ; et
le réglage de la puissance d'émission ajustée à une valeur égale au niveau de puissance émisse requis moins la différence calculée.

4. Procédé selon la revendication 1, comprenant en outre :
la détermination d'un temps d'arrivée associé à la réception sur la première antenne ;
la détermination d'un temps d'arrivée associé à la réception sur la seconde antenne ;
le calcul d'une différence entre le temps d'arrivée associé à la réception sur la première antenne et le temps d'arrivée associé à la réception sur la seconde antenne ; et
l'ajustement d'une synchronisation associée à l'envoi sur la base de la différence calculée, l'envoi comprenant l'envoi de la transmission à l'aide de la synchronisation ajustée si l'antenne sélectionnée de la première antenne et de la seconde antenne est différente de l'antenne sélectionnée pour une transmission précédente.

5. Produit-programme informatique de transmission par un dispositif à duplexage par répartition dans le temps (TDD), comprenant un code qui, à son exécution, entreprend le procédé selon l'une quelconque des revendications 1 à 4.

6. Appareil de transmission par un dispositif à duplexage par répartition dans le temps (TDD), comprenant :
un moyen (170) de réception d'une communication sur une fréquence au niveau d'une première antenne (132) présentant une première condition de réception et d'une seconde antenne (134) présentant une seconde condition de réception ;
un moyen (140) de détermination d'une première condition d'émission de la première antenne sur la base de la première condition de réception et d'une seconde condition d'émission de la seconde antenne sur la base de la seconde condition de réception ;
un moyen (142) de comparaison de la première condition d'émission et de la seconde condition d'émission ;
un moyen (144) de sélection d'une de la première antenne et de la seconde antenne sur la base de la comparaison ;
l'appareil étant **caractérisé en ce qu'**il comprend en outre
un moyen (160) de calcul d'une différence entre une puissance de réception de première antenne et une puissance de réception de seconde antenne ;
un moyen (160) d'ajustement d'une puissance d'émission de l'antenne sélectionnée de la première antenne et de la seconde antenne sur la base de la différence calculée, et
un moyen (170) d'envoi d'une transmission sur la fréquence à partir de l'antenne sélectionnée de la première antenne et de la seconde antenne, l'envoi comprenant l'envoi de la transmission en utilisant la puissance d'émission ajustée, dans lequel le moyen d'envoi est configuré pour envoyer la transmission en utilisant la puissance d'émission ajustée si l'antenne sélectionnée de la première antenne et de la seconde antenne est différente de l'antenne sélectionnée pour une transmission précédente.

7. Appareil selon la revendication 6, dans lequel la puissance de réception de première antenne et la puissance de réception de seconde antenne sont une puissance de code de signal reçu (RSCP) ou une puissance reçue de signal de référence (RSRP).

8. Appareil selon la revendication 6, dans lequel le moyen d'ajustement d'une puissance d'émission est configuré pour :
recevoir une indication d'un niveau de puissance émise requis ; et
régler la puissance d'émission ajustée à une valeur égale au niveau de puissance émise requis moins la différence calculée.

9. Appareil selon la revendication 7, dans lequel le moyen de détermination de réception/émission est configuré en outre pour :
déterminer un temps d'arrivée associé à la réception sur la première antenne ;
déterminer un temps d'arrivée associé à la réception sur la seconde antenne ;
calculer une différence entre le temps d'arrivée associé à la réception sur la première antenne et le temps d'arrivée associé à la réception sur la seconde antenne ; et
ajuster une synchronisation associée à l'envoi sur la base de la différence calculée, dans lequel le module de communication configuré pour envoyer comprend le module de communication configuré pour envoyer la transmission à l'aide de la synchronisation ajustée si l'antenne sélectionnée de la première antenne et de la seconde antenne est différente de l'antenne sélectionnée pour une transmission précédente.
